# EUROPÄISCHE PATENTANMELDUNG

(11) **EP 1 174 229 A2**
(43) Veröffentlichungstag der Anmeldung: **23.01.2002**
(21) Anmeldenummer: 01117274.9
(22) Anmeldetag: 17.07.2001
(51) Int. Cl.: B26D 7/26, B26D 5/04, B23D 35/00

(54) **Längsteilschere**

(30) Priorität: 17.07.2000 DE 10034719
(71) Anmelder: Josef Fröhling GmbH & Co. KG, Walzwerksmaschinenbau, 57462 Olpe (DE)
(72) Erfinder: Müller, Ingolf, 57462 Olpe (DE)
(74) Vertreter: Walter, Helmut, Dipl.-Ing.

(57) **Zusammenfassung**

Es wird eine Längsteilschere bestehend aus zwei relativ zueinander verstellbaren Messerwellen beschrieben, die jeweils mit mindestens einem Messer ausgerüstet sind. Ein Teil der Messer ist mittels Druckfedern und in Gegenrichtung mit Druckluft parallel zur Messerwellenachse verstellbar. Mit entsprechender Auslegung der Spannkraft wird eine Werkzeugmaschine geschaffen, die eine automatische Anstellung der Werkzeuge, insbesondere Messer bzw. Federmesser ermöglicht. Außer der dadurch erreichten zuverlässigen Anlage der Messerpaare wird die Bereitstellung der Maschine insbesondere bei einem Werkzeugaustausch vereinfacht und beschleunigt.

## Beschreibung

Die Erfindung bezieht sich auf eine Längsteilschere bestehend aus zwei relativ zueinander verstellbaren Messerwellen, die jeweils mit mindestens einem Messer ausgerüstet sind.

Maschinen dieser Art werden zum Schneiden von Bahnenmaterial verwendet. Übliche Längsteilscheren enthalten einen zwei Ständer tragenden Rahmen. Die Ständer nehmen die Lagerung von zwei anstellbaren Messerwellen auf, die angetrieben werden können und für den Teilungsvorgang mindestens ein zusammenwirkendes Messerpaar tragen. Einer der Ständer kann zum rüsten und umrüsten der Maschine geöffnet werden.

Die Problematik bei den Maschinen ist die Beeinträchtigung der Trennqualität durch Abnutzung der Werkzeuge. Zur Lösung dieses Problems ist die Verwendung eines Federmessers bekannt geworden, das aufgrund seiner elastischen Eigenschaften sich zuverlässig an das feste Gegenmesser anlegen soll. Die Nachstellung des Federmessers sind jedoch enge Grenzen gesetzt, so daß bei stärkerer Abnutzung des festen Gegenmessers das geschilderte Problem wieder auftaucht.

Der Erfindung liegt die Aufgabe zugrunde, eine Schere der eingangs genannten Art zu schaffen, mit der eine gleichbleibende Schnittqualität gewährleistet werden kann.

Die Aufgabe wird erfindungsgemäß mit den Merkmalen des Anspruchs 1 gelöst.

Durch in Achsrichtung der Messerwellen verstellbare Messer ist es möglich, mit entsprechenden Kraftmitteln die Messerpaare auf konstantem Kontaktdruck zu halten, womit ein Trenn- bzw. Teilungsvorgang mit gleichbleibender Qualität erreichbar ist. Hierzu werden die Kräfte so auferlegt, daß das verstellbare Messer gegen das feststehende Messer des Messerpaare gelegt wird.

Durch Einwirkung einer Kraft in Gegenrichtung kann das bewegliche Messer in eine geöffnete Stellung gebracht werden, wodurch ein Austausch der Werkzeuge erleichtert und beschleunigt werden kann.

Gemäß einer Ausgestaltung der Erfindung ist eine hydraulische oder vorzugsweise pneumatische Kraft für das bewegliche Messer bzw. einen das Messer haltenden Messerträger vorgesehen. Das Fluidsystem kann dabei zur Ausübung von Kräften in beide Richtungen, z.B. durch Über- und Unterdruck, ausgebildet sein. Die Hydraulik ermöglicht eine Feinabstimmung der auf das Messer einwirkenden Kraft und sichert somit den gewünschten Teilungs- bzw. Schneidvorgang. Bohrungen innerhalb der Messerwelle bieten sich als Führungen für ein Druckmedium an.

Mit entsprechender Auslegung der Spannkraft wird eine Werkzeugmaschine geschaffen, die eine automatische Anstellung der Werkzeuge, insbesondere Messer bzw. Federmesser ermöglicht. Außer der dadurch erreichten zuverlässigen Anlage der Messerpaare wird die Bereitstellung der Maschine insbesondere bei einem Werkzeugaustausch vereinfacht und beschleunigt.

Eine fertigungstechnisch einfache Lösung besteht in der Verwendung eines mechanischen Druckmittels, z.B. einer Druckfeder, für die Öffnungsrichtung des Messers und eines Druckmediums, z.B. Druckluft, als Kraft in die Gegenrichtung.

Die Druckfeder hält den beweglichen Messerträger in einer geöffneten Stellung. Nach einem Arbeitsgang und dem Abschalten des Mediumdrucks kann somit die Maschine zum Umrüsten sofort geöffnet und nach der Umrüstung die Anstellung der Messerwelle ohne Risiko durchgeführt werden. Das Anlegen des bzw. der Messer erfolgt schließlich automatisch durch Einleiten des Mediumdruckes.

Die erfindungsgemäße Ausführung läßt sich bei allen Längsteilscheren und unabhängig von den verwendeten Messern anwenden. Es können beispielsweise für die beweglichen Messer Federmesser verwendet werden, die an einen beweglichen Messerträger angebracht werden.

Gemäß einer weiteren Ausgestaltung der Erfindung sind die Messerwellen jeweils mit zwei oder mehr Messern ausgerüstet, wobei mindestens ein Teil der Messer bzw. deren Messerträger beweglich sind.

Die Bestückung der Messerwellen mit festen und/oder beweglichen Messern ist beliebig. Vorteilhaft ist jedoch eine Ausführung, bei der nur eine Welle mit beweglichen Messern ausgerüstet wird, insbesondere dann, wenn ein Druckmedium als Druckmittel verwendet wird.

In einer Variante wird die eine Messerwelle mit feststehenden und die andere Messerwelle mit beweglichen Messern bzw. Messerträgern bestückt.

Gemäß einer weiteren Ausgestaltung der Erfindung enthält die Messerwelle mit den beweglichen Messern bzw. Messerträgern auch feststehende Messer. Damit wird der Aufwand ohne nennenswerte Einbuße der Teilungsqualität verringert. Bei dieser Ausgestaltung können beispielsweise die feststehenden Messer dieser Welle den weniger abgenutzten festen Messern der anderen Welle gegenübergestellt werden.

Es sind auch Ausführungen denkbar, bei denen die Messerwelle für die beweglichen Messer oder ein Werkzeugsatz auf der Messerwelle axial verschiebbar ausgebildet ist. Damit werden alle Messer mit gleichem Druck an das zugehörige Gegenmesser angedrückt, wobei die sich aufgrund von unterschiedlichen Abnützungen ergebenen Unterschiede durch die Federmesser ausgeglichen werden.

Ausführungsbeispiele der Erfindung sind in der Zeichnung schematisch dargestellt, es zeigen:
Fig.1 eine Längsteilschere in Seitenansicht,
Fig.2 ein Detail aus Fig.1 und
Fig.3 ein Ausführungsbeispiel.

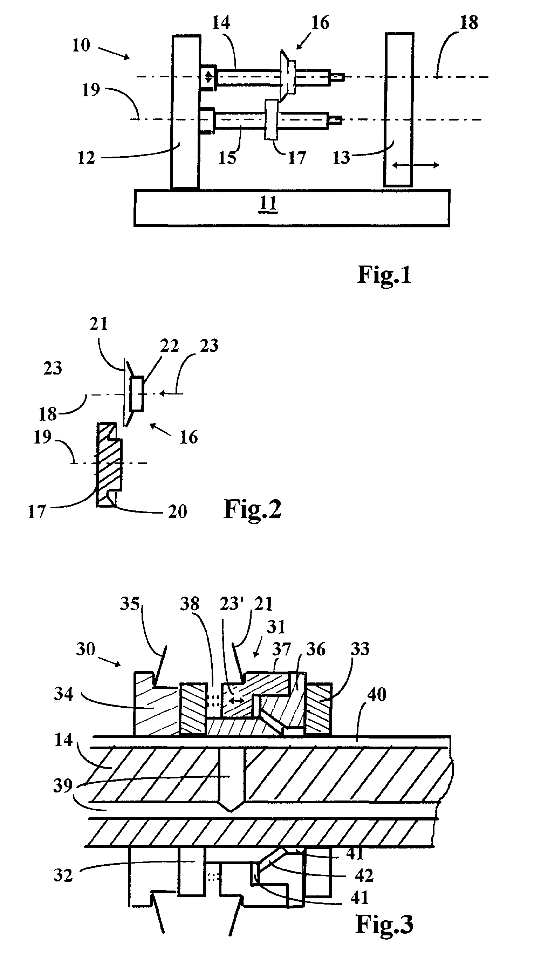

In Fig.1 ist eine Längsteilschere 10 dargestellt, die im wesentlichen aus einem Rahmen 11 besteht, auf dem ein fester Ständer 12 und ein verschiebbarer Ständer 13 montiert sind. Zwei antreibbare Messerwellen 14 und 15 sind in den Ständern 12 und 13 gelagert. Die Messerwellen 14,15 werden nach Öffnung des verschiebbaren oder aufschwenkbaren Ständers 13 mit Messern 16,17 für den Schneidvorgang bestückt. In der Fig.1 ist ein Messerpaar 16,17 gezeigt. Je nach Anwendung werden ein oder mehrere Messerpaare 16,17 aufgesetzt. Die Wellenachsen sind mit den Bezugszeichen 18,19 gekennzeichnet.

In Fig.2 ist das Messerpaar 16,17 aus Fig.1 näher dargestellt. Das auf der Messerwelle 15 befindliche Messer 17 mit der Schneidkante 20 ist fest mit der Welle 15 verbunden. Das Messer 16 der anderen Messerwelle 14 besteht aus einem Federmesser 21 und einem diesen haltenden Messerträger 22, der in Richtung der Wellenachse 18 verschiebbar gestaltet ist.

Das bewegliche Messer 16 wird nach Anstellung der beweglichen Messerwelle 14 mittels einer in Pfeilrichtung 23 wirkenden Kraft so verschoben, daß das Federmesser 21 mit seiner Schneidkante gegen die Schneidkante 20 des festen Messers 17 zum Anliegen kommt. Durch die anhaltende Krafteinwirkung wirkt auf die Schneidkanten des Messerpaares stets die gleiche Spannkraft, so daß eine qualitativ gleichmäßige Teilung der zu schneidenden Ware gewährleistet ist.

In der Regel werden zum Schneiden von mehreren Bahnen die Messerwellen 14,15 mit entsprechend vielen Messerpaaren 16,17 ausgerüstet. Jedes bewegliche Messer 16 wird individuell mit einer Druckkraft beaufschlagt. In der Regel wird dabei eine Messerwelle, z.B. 14, mit beweglichen und die andere Messerwelle 15 mit festen Messern bestückt.

Wenn der fertigungstechnische Aufwand der Maschine niedrig gehalten werden soll, können auf der Messerwelle 14 mit beweglichen Messern alternierend feste und bewegliche Messer vorgesehen werden, die jeweils mit festen Messern 17 der anderen Messerwelle 15 zusammenwirken. In diesem Fall werden bei den festen Messern der ersten Welle 14 zweckmäßigerweise Federmesser verwendet.

Ein Beispiel zu dieser Variante ist in Fig.3 gezeigt, in der die obere Messerwelle 14 aus Fig.1 mit zwei Messern im Längsschnitt dargestellt ist. Ein festes Messer 30 ist vom beweglichen Messer 31 durch einen Distanzring 32 getrennt. Auf der anderen Seite trennt ein weiterer Distanzring 33 das bewegliche Messer 31 von einem nicht dargestellten zweiten festen Messer, usw. Die zweite, in Fig.3 nicht gezeigte Messerwelle 15 ist mit entsprechend vielen festen Messern, wie z.B. Messern 17, ausgerüstet. Die Werkzeuge beider Messerwellen werden hydraulisch arretiert.

Die festen Messer 30 bestehen jeweils aus einem Messerträger 34, der zwischen Distanzringen 32 verankert ist und ein Federmesser 35 trägt. Die beweglichen Messer 31 enthalten jeweils einen Messerträger 37, der auf einem festen Sockel 36 axial in Pfeilrichtung 23' bewegbar ist. Der Messerträger 37 wird von einer Druckfeder 38 in Öffnungsstellung beaufschlagt. Die Druckfeder 38 oder ein anderes mechanisches Druckelement oder ein elastisches Material hält das bewegliche Messer in seiner geöffneten Stellung.

Nach dem Anstellen der Messerwellen 14,15 werden die beweglichen Messerträger 37 mit einer Spannkraft gegen die Kraft der Feder 38 beaufschlagt. Die Federmesser 21 werden dabei gegen die feststehenden Messer 17 der anderen Messerwelle 15 gelegt. Mit entsprechender Auslegung der Spannkraft ist eine Werkzeugmaschine geschaffen, die eine automatische Anstellung der Werkzeuge, insbesondere Messer bzw. Federmesser ermöglicht. Außer der dadurch erreichten Vereinfachung und Beschleunigung des Maschineneinsatzes bleiben die Messer auch bei lang anhaltenden Schneidvorgängen in Anlage.

Für das Druckmedium ist in der Messerwelle 14 ein Kanalsystem vorgesehen, das in einer inneren Bohrung 39 und einer Längsnut 40 besteht. Die ringförmigen Messerträger 34, Sockel 36 und Distanzstücke 32,33, die dicht aneinander gelegt sind, schließen die Längsnut 40 zu einem nach Bedarf anzapfbaren Kanal, der mit Ringkanälen 41 und Durchbrüchen 42 der Sockeln 36 kommunizieren kann.

## Patentansprüche

1. Längsteilschere bestehend aus zwei relativ zueinander verstellbaren Messerwellen, die jeweils mit mindestens einem Messer ausgerüstet sind, **dadurch gekennzeichnet, daß** mindestens ein Messer (16,31) parallel (23,23') zur Messerwellenachse (18,19) verstellbar ist.

2. Längsteilschere nach Anspruch 1, **dadurch gekennzeichnet, daß** Mittel (38,39-42) zur Ausübung von Kräften in die Verstellrichtung (23,23') des bzw. der Messer (16,31) vorgesehen sind.

3. Längsteilschere nach Anspruch 2, **dadurch gekennzeichnet, daß** auf das bzw. die beweglichen Messer (16) ein hydraulisches oder pneumatisches System wirkt.

4. Längsteilschere nach Anspruch 2, **dadurch gekennzeichnet, daß** auf das bzw. die beweglichen Messer jeweils eine mechanische Druckkraft (38,23') und in Gegenrichtung (23') ein Druckmedium (39-42) wirken.

5. Längsteilschere nach Anspruch 3 oder 4, **dadurch gekennzeichnet, daß** in der Messerwelle (14) für bewegliche Messer (16,31) Bohrungen (39) und ggf. mindestens eine Längsnut (40) für das Hydrauliksystem vorgesehen sind.

6. Längsteilschere nach einem der vorhergehenden Ansprüche, **dadurch gekennzeichnet, daß** das oder die beweglichen Messer (16,31) aus einem beweglichen Messerträger (22,37) und einem daran befestigten Federmesser (21) ausgebildet ist.

7. Längsteilschere nach einem der vorhergehenden Ansprüche, **dadurch gekennzeichnet, daß** die Messerwellen (14,15) jeweils mit zwei oder mehr Messern (30,31;17) ausgerüstet sind.

8. Längsteilschere nach Anspruch 7, **dadurch gekennzeichnet, daß** eine Messerwelle (15) die feststehenden Messer (17) und die andere Messerwelle (14) die beweglichen Messer (16,31) aufnimmt.

9. Längsteilschere nach Anspruch 7, **dadurch gekennzeichnet, daß** mindestens eine Messerwelle (14) mit feststehenden Messern (30) und beweglichen Messern (31) ausgerüstet ist.

10. Längsteilschere nach Anspruch 9, **dadurch gekennzeichnet, daß** eine der beiden Messerwellen (14,15) oder ein Werkzeugsatz (16;17) auf der Messerwelle axial verschiebbar ausgebildet ist.
